# FASCICULE DE BREVET EUROPEEN

(11) **EP 2 095 638 B1**
(45) Date de publication et mention de la délivrance du brevet: **14.08.2013**
(21) Numéro de dépôt: 07870386.5
(22) Date de dépôt: 05.12.2007
(51) Int. Cl.: H04N 7/14

(54) **PROCEDE ET DISPOSITIF POUR LA MISE EN RELATION DE PERSONNES A DISTANCE**
VERFAHREN UND VORRICHTUNG ZUR VERBINDUNG ENTFERNTER INDIVIDUEN
METHOD AND DEVICE FOR CONNECTING REMOTE INDIVIDUALS

(30) Priorité: 05.12.2006 FR 0655304
(43) Date de publication de la demande: 02.09.2009
(73) Titulaire: Technosens, 69150 Decine Charpieu (FR)
(72) Inventeur: Chevalier, Thierry, 69150 Decines (FR)
(74) Mandataire: Le Cacheux, Samuel L.R.
(86) Numéro de dépôt international: PCT/FR2007/052440
(87) Numéro de publication internationale: WO 2008/071893

(56) Documents cités:
- EP-A- 1 633 141
- WO-A-02/30129
- FR-A- 2 849 738
- US-A- 5 109 222
- US-A- 5 999 207

## Description

### DOMAINE DE L'INVENTION

L'invention concerne un procédé et un dispositif destinés à permettre la mise en relation de personnes à distance. Elle concerne plus particulièrement une solution propre à résoudre la problématique née de la surveillance par leurs proches de personnes en perte d'autonomie, et notamment les personnes âgées et/ou handicapées, et corollairement de l'isolement grandissant de telles personnes. Elle vise également lesdites personnes en quête d'autonomie.

Ainsi, l'invention vise-t'elle à maintenir voire à promouvoir le lien social entre de telles personnes et leurs proches, ce lien social permettant de stimuler l'intellect, et corollairement d'éviter l'isolement qui influence négativement la qualité de vie. Elle assure aussi une fonction première, visant à permettre l'échange et la communication.

Avec l'accroissement de la durée de vie, le nombre de personnes en perte d'autonomie augmente. Corollairement, pour le bien être de celles-ci, on cherche de plus en plus à les maintenir à leur domicile dès lors que les pathologies susceptibles de les affecter ne sont pas de nature à nécessiter un suivi médical lourd au quotidien.

### ETAT ANTERIEUR DE LA TECHNIQUE

A ce jour, il n'existe pas de solution satisfaisante pour permettre aux personnes en perte ou en quête d'autonomie d'échanger, de communiquer, d'avoir une présence, un compagnon non intrusif, un regard extérieur vers le monde. Certes, le téléphone demeure le moyen le plus pratique, encore faut-il pour cela que la personne en perte ou en quête d'autonomie dispose d'un minimum de ses facultés pour manipuler un appareil conçu pour des utilisateurs ayant toutes leurs facultés.

*A fortiori,* l'outil Internet s'avère pas ou peu adapté, dans la mesure où, tout d'abord, il s'agit là d'un moyen de communication récent, rebutant la majorité des personnes âgées, d'autre part, dans la mesure où il nécessite *a minima* de disposer d'un PC et enfin en raison de la relative maîtrise que cet outil de communication nécessite.

### EXPOSE DE L'INVENTION

La présente invention vise à palier ces solutions insatisfaisantes de l'art antérieur en proposant un moyen interactif, convivial, non intrusif et ne nécessitant pas la maîtrise des technologies de communication récentes et donc, parfaitement à la portée de personnes diminuées soit sur le plan physique, soit sur le plan mental. A cet effet

l'invention vise un dispositif conform aux revendications. Un procédé de mise en relation de personnes à distance, respectivement une ou plusieurs personnes appelantes et une personne appelée, réputée être en perte ou en quête d'autonomie, et inversement, utile à la compréhension de l'invention, consiste:
- à associer un écran de télévision ou de PC au réseau téléphonique, de telle sorte à permettre la transmission d'informations relatives à la ou aux personnes appelantes, et la visualisation par la personne appelée de ces informations, et vice versa ;
- à munir la personne appelée de moyens propres à lui permettre, d'une part d'appeler elle-même l'une des personnes appelantes, et d'autre part, lorsqu'elle est appelée, et après avoir visualisé lesdites informations, de donner suite ou non à l'appel entrant.

Selon l'invention, l'une au moins desdites informations à la disposition de la personne appelée est constituée par une photographie, du visage notamment de l'interlocuteur appelant, voire par une vidéo de ladite personne. Ce faisant, la personne appelée est immédiatement informée de l'origine de l'appel, et dispose ainsi de la faculté d'y donner suite, l'objectif premier de l'invention étant de limiter ce type d'interactions avec le cercle proche de la personne appelée.

En outre, et avantageusement, lesdites informations peuvent également s'accompagner de la prononciation du nom, du prénom ou du surnom de la personne appelante, ces données pouvant même être prononcée par la voix de ladite personne, favorisant ainsi la convivialité de l'interaction, et susceptible de placer la personne appelée dans un environnement de connaissance, et donc de confiance.

Avantageusement, le procédé de l'invention permet également l'acquisition et la transmission de l'image de la personne appelée en direction de la personne appelante aux fins de permettre à cette dernière la visualisation de la personne en question et le cas échéant, de déclencher les mesures nécessaires en tant que de besoin. Cet échange des images est susceptible d'intervenir dans les deux sens de communication.

L'invention concerne le dispositif pour la mise en relation de personnes à distance et qui comprend en outre
- un écran de téléviseur ou de PC, destiné à permettre la visualisation, notamment par la personne en perte ou en quête d'autonomie des informations relatives à la personne appelante ou qu'elle désire appeler ;
- une centrale intelligente, connectée à l'écran et au réseau téléphonique, destinée à assurer la gestion du dispositif de l'invention, outre l'interface avec ledit réseau téléphonique ;
- un combiné muni d'un microphone et de touches actionnables, destiné à permettre la gestion des informations affichées sur l'écran et corollairement les appels entrants et les appels sortants, ledit combiné communiquant avec la centrale intelligente par mode radiofréquence, et notamment par technologie WiFi ou BLUETOOTH^{®}, ledit combiné étant associé à un socle.

Selon une caractéristique avantageuse de l'invention, la centrale intelligente est connectée par une liaison Internet aux différentes personnes appelantes, liaison par laquelle sont en outre susceptibles de transiter les appels téléphoniques.

En d'autres termes, l'invention consiste à utiliser un écran, et notamment l'écran de télévision dont sont classiquement munis tous les foyers, en association avec le réseau téléphonique voire Internet, par le biais d'une centrale intelligente assurant la fonction de serveur, afin de permettre en premier lieu le caractère interactif de l'appel téléphonique, et en second lieu, à la personne appelée de reconnaître l'appelant et ainsi être davantage encline à répondre et enfin, à optimiser le caractère interactif de l'échange en munissant ladite centrale intelligente en question d'un capteur vidéo, et notamment d'une Webcam ou d'une caméra vidéo, qui, sur autorisation de la personne appelée par simple pression d'une touche de la télécommande, permet alors à la personne appelante de visualiser la personne appelée.

Avantageusement, le capteur vidéo assure deux fonctions :
■ une première fonction de capture d'images, et notamment de capture de la personne appelée, sous réserve de l'acceptation par cette dernière de la communication vidéo ;
■ une seconde fonction de traitement, par acquisition de manière non intrusive, de données du type détection ou au contraire absence de détection de mouvement de la personne appelée, de couleur, de luminosité de la pièce soumise à l'action dudit capteur, etc., et de manière générale, de données susceptibles d'indiquer ou de refléter un état particulier de la personne appelée ou située dans le champ dudit capteur, et susceptible d'induire, après traitement par la centrale intelligente, l'émission d'un signal en direction de la personne appelante ou de toute autre entité destinée à assurer un contrôle, une surveillance, ou un suivi de ladite personne appelée ; en d'autres termes, le capteur joue dans cette configuration la fonction d'alerte passive.

Selon l'invention, le socle sur lequel est fixé réversiblement le combiné, permet l'annonce et l'affichage d'un appel entrant, outre l'acceptation de l'appel entrant par simple pression sur un bouton, le réglage du volume, l'arrêt du capteur vidéo, lorsqu'il est en mode d'acquisition d'images, outre la possibilité du fonctionnement du téléphone en mode main libre. Au surplus, le socle est relié au réseau électrique, de sorte qu'il permet le rechargement en énergie électrique du combiné, ce dernier étant muni de piles ou batteries rechargeables.

Le combiné est quant à lui muni d'un haut-parleur destiné, par le biais de la centrale intelligente, à relayer la conversation téléphonique. Il est avantageusement muni d'un second haut-parleur permettant les conversations en mode main libre.

En outre, le combiné est avantageusement muni d'une prise type « jack » analogique, destinée à permettre la connexion de capteurs personnalisés susceptibles d'être actionnés par une touche ou un bouton supplémentaire ménagé sur ledit combiné, outre la connexion d'un certain nombres d'appareils de télésanté, par essence non communicants, et donc susceptibles de transmettre les mesures qu'ils sont destinés à réaliser à une personne habilitée, cette dernière pouvant être constituée par un établissement de santé, du personnel médico-social, du personnel soignant, voire des prestataires de service.

Selon l'invention, la télécommande comporte une touche d'urgence actionnable par la personne appelée, pour le cas échéant, déclencher par le biais de la centrale intelligente, l'appel à une ou plusieurs personnes dites « chaîne d'appels » paramétrées *ab initio* ou modulables à volonté par le réseau Internet au sein de ladite centrale, par un « référent » par le biais d'un loggin et d'un mot de passe, pour assurer la sécurité des données. Ainsi, le paramétrage du dispositif de l'invention est-il susceptible d'être entièrement géré à distance.

En outre et avantageusement, la télécommande comporte un organe d'alerte sonore et/ou visuel, et/ou un vibreur, permettant à la personne appelée de détecter la présence d'un appel entrant.

Selon l'invention, la centrale intelligente comporte des moyens actionnables par le détenteur du dispositif de l'invention, permettant de relayer le son de la télécommande sur les haut-parleurs du téléviseur.

### BREVE DESCRIPTION DES DESSINS

La manière dont l'invention peut être réalisée et les avantages qui en découlent ressortiront mieux de l'exemple de réalisation qui suit donné à titre indicatif et non limitatif à l'appui des figures annexées

Les figures 1 à 3 illustrent les différentes étapes en relation avec un appel entrant, mettant en oeuvre le dispositif conforme à l'invention.

La figure 4 est illustre l'écran du téléviseur dans le cadre d'un appel sortant.

### DESCRIPTION DETAILLEE DE L'INVENTION

Selon l'invention le dispositif interactif est dans le cas particulier qui suit, destiné à être associé au téléviseur de la personne appelée, et en l'espèce d'une personne seule. On pourrait cependant concevoir que l'écran nécessaire au dispositif soit celui d'un ordinateur type PC.

On associe ainsi à ce téléviseur tout d'abord un combiné téléphone d'un type particulier. Le combiné interagit en fait avec une centrale intelligente, comportant une ou plusieurs cartes électroniques, assurant en outre les fonctions de serveur et d'interface avec le téléviseur, et avec le réseau téléphonique.

Le combiné est constitué à proprement parler d'une télécommande, permettant de suivre une conversation téléphonique. A cet effet, elle est munie d'un microphone, d'un haut-parleur et avantageusement d'un second haut-parleur de plus forte puissance pour une émission sonore de plus fort volume. Cette télécommande a vocation à être particulièrement simplifiée et notamment à éviter la multiplication des touches, étant rappelé qu'elle est destinée à être actionnée par une personne, notamment en perte ou en quête d'autonomie, n'ayant plus nécessairement toutes les facultés d'utilisation et de compréhension d'une personne plus saine.

Ainsi, elle comporte des touches en nombre limité, destinées à permettre notamment l'acceptation ou le refus d'un appel téléphonique entrant, l'arrêt de la communication, la sélection d'une personne à appeler et de manière générale la gestion des informations susceptibles de s'afficher sur l'écran du téléviseur.

En outre, elle est également susceptible de comprendre une touche d'urgence, actionnable en cas de détresse, et induisant l'appel téléphonique sortant en direction d'une personne particulière, notamment un proche, ou un référent, paramétrée *ab initio.*

La télécommande comporte avantageusement un organe d'alerte sonore et/ou visuel, ce dernier étant constitué alors par exemple d'une LED. Dans le même esprit, elle peut également intégrer un vibreur. Ces différents organes sont destinés à indiquer à la personne appelée l'occurrence d'un appel entrant.

Enfin la télécommande ou combiné est susceptible d'être paramétré tant pour être active, c'est à dire remplir les fonctions d'interaction précédemment décrites, et notamment l'interaction avec le réseau téléphonique, que pour être réactive. Dans cette dernière configuration, la centrale intelligente induit l'allumage d'une ou de plusieurs LEDs du combiné, sa vibration, lorsqu'il est muni d'un vibreur, l'émission d'un signal sonore, et notamment d'un son, d'une musique, d'un message par le haut parleur dont il est muni, et ce, en suite soit de l'actionnement de l'une des touches dudit combiné, soit en suite de la détection d'un fait paramétrable dans ladite centrale intelligente, capté par le capteur vidéo, décrit ci-après plus en détail.

Cette télécommande est avantageusement montée réversiblement sur un socle, relié au secteur d'alimentation électrique, et destiné à recharger les batteries dont elle est munie. Outre cette fonction, le socle est également destiné :
- à servir d'assise au combiné, lorsque celui-ci n'est pas utilisé ;
- à permettre la visualisation d'un appel entrant, ledit socle étant muni à cet effet d'un voyant lumineux ;
- à accepter un appel entrant, le socle étant muni d'un bouton à cet effet ; le fait d'appuyer sur ce bouton actionne le mode main libre du combiné, qui dans cette hypothèse, demeure sur le socle ;
- à régler le volume du haut parleur du combiné.

Le socle ne communique avec le combiné que lorsque celui-ci repose dessus.

Le combiné ou télécommande communique par WiFi ou par BLUETOOTH^{®}, ou par tout autre mode radiofréquence avec un boîtier intégrant ladite centrale intelligente.

Ce boîtier est destiné en premier lieu à faire fonction de serveur et à permettre de servir d'interface conviviale en association avec l'écran du téléviseur, entre la personne appelée et l'appelant.

En d'autres termes, cette interface est destinée à servir de mixte entre le réseau téléphonique, filaire ou non, et le support constitué par l'écran de télévision. Cependant, la personne appelée est à même de conserver la main par l'entremise de la télécommande interagissant avec ledit boîtier.

Le boîtier est également relié au secteur d'alimentation électrique afin d'assurer son alimentation électrique. Il est également connecté au téléviseur par le biais de la prise péritel dont celui-ci est traditionnellement muni. Le boîtier est enfin connecté au réseau Internet, et notamment ADSL, soit par liaison filaire, soit par WiFi.

Il comporte une ou plusieurs cartes mémoires, sur lesquelles sont stockés d'une part, un logiciel de fonctionnement et de gestion du dispositif d'interaction, et d'autre part, les données de paramétrage introduites par le référent ou par l'entité assurant la gestion effective du fonctionnement de l'installation, et susceptibles d'être régulièrement mises à jour par ces derniers, ainsi que des données d'usage.

Ce paramétrage peut être réalisé à distance par le biais de la liaison Internet précitée. Le déférent ou l'entité en question sont munis à cet effet d'un loggin et d'un mot de passe spécifiques, de telle sorte à sécuriser les données introduites ou modifiées.

Parmi les différentes données susceptibles d'être ainsi paramétrées, on peut mentionner :
- le nom, prénom et éventuellement surnom des personnes susceptibles d'appeler;
- leur date de naissance ;
- leur adresse e-mail ;
- leur numéro de téléphone cellulaire ;
- une photographie de leur visage ;
- leur numéro de téléphone fixe ;
- voire un mot de passe, destiné à permettre à chacune des personnes susceptibles d'appeler d'avoir accès à sa propre page WEB, pour ainsi modifier les données susceptibles de s'afficher sur le téléviseur de la personne appelée, ou d'être prononcées sur le haut parleur de la télécommande, et de manière générale, des données personnelles..

Ces différentes informations sont saisies dans une base de données et transmises au boîtier lorsqu'il est connecté sur le réseau Internet. Il est ainsi créé une liste dite « liste blanche », seules les personnes figurant sur cette liste étant susceptibles de pouvoir rentrer en contact avec le détenteur du dispositif d'interaction, donc avec la personne appelée.

On conçoit de fait qu'en raison de ce mode de paramétrage à distance, il est possible de procéder à des mises à jour périodiques, notamment en termes de photographies, de voix, et en termes de liste de contacts.

Au surplus, des correspondants peuvent être ajoutés ou supprimés et ce par tous moyens, à l'initiative notamment du ou des référents.

Le boîtier comporte un émetteur-récepteur WiFi ou BLUETOOTH^{®} ou autre pour permettre l'interaction avec la télécommande.

Il comporte également une diode électroluminescente ou tout organe lumineux équivalent, qui s'éclaire ou clignote lorsqu'un appel entrant est détecté.

Avantageusement, ledit boîtier est associé à un capteur vidéo, telle qu'une caméra vidéo, type Webcam, permettant d'acquérir l'image en dynamique de la personne appelée, c'est-à-dire de la personne détentrice du dispositif conforme à l'invention. Cette caméra peut en outre être couplée à capteur vidéo, susceptible de permettre différents modes de prise de vue, et notamment :
■ un mode cadreur dit « intelligent », selon lequel le portrait de la personne appelée ou « surveillée » est automatiquement cadré, même si elle se déplace ;
■ un mode dit « environnement », selon lequel l'ensemble du champ de vision de la caméra est transmis, par exemple au référent ou à l'entité chargée de la surveillance ;
■ un mode dit « de pointage », selon lequel le capteur interagit avec le combiné ; c'est le combiné, muni alors d'une LED émettant un faisceau sensiblement collimaté, qui sert alors de pointeur, et le cadrage s'effectue sur l'objet ou la scène indiquée en suite de l'interaction avec la centrale intelligente.

Avantageusement, le boitier comporte une LED qui s'éclaire lorsque la caméra vidéo est en prise d'image afin d'indiquer le fonctionnement de cette dernière.

Selon une caractéristique avantageuse de l'invention, le capteur vidéo est susceptible de fonctionner en mode dit de traitement. Il agit alors de manière non intrusive, par détection de données paramétrables par le référent au sein de la centrale intelligente, telles que par exemple le mouvement de la personne appelée, la couleur et/ou la luminosité de la pièce soumise à l'action dudit capteur, etc. Une LED indique lorsque le capteur vidéo effectue de tels traitements.

Ce faisant, en raison de l'interface de la centrale intelligente avec le réseau téléphonique, voire Internet, l'état particulier de la personne située dans le champ dudit capteur, ou dont l'habitation est dans le champ dudit capteur, peut être détecté. Cet état peut résulter de la chute de la personne considérée, de sa perte de connaissance, etc. La détection d'un tel état induit alors, après traitement par la centrale intelligente, l'émission d'un signal en direction de la chaîne d'alertes ou de toute autre entité destinée à assurer un contrôle, une surveillance, ou un suivi de ladite personne appelée ; en d'autres termes, le capteur joue dans cette configuration la fonction d'alerte passive.

En mode de fonctionnement normal, le téléviseur est soit allumé, parce que visualisé par le détenteur du dispositif d'interaction, soit en mode veille, pour ainsi permettre en cas d'appel, de faire apparaître sur l'écran les données interactives conformément à la présente invention.

Au surplus, le dispositif conforme à l'invention est susceptible d'être relié à un serveur distant, géré par l'entité assurant la gestion effective du fonctionnement de l'installation, ledit serveur distant mémorisant le chemin d'accès à l'adresse IP du boîtier et la mettant à jour lors de chaque mise en marche du dispositif. Ce faisant, on dispose en permanence en mémoire dans une base de données l'état de connexion au réseau du dispositif particulier.

Comme cela ressort clairement de la présentation qui précède, le dispositif conforme à l'invention permet l'échange avec des proches et de manière générale avec une liste déterminée de personnes en utilisant la vue, l'ouïe et le toucher.

Afin de faciliter l'utilisation de celui-ci par la personne appelée, constituant la finalité première de l'invention, l'interaction se veut intuitive et simple.

En outre, le dispositif de l'invention est susceptible de communiquer bien évidement avec un dispositif de même nature, mais également avec un téléphone classique, un téléphone portable voire avec un ordinateur type PC équipé ou non d'une Webcam.

Il va être décrit ci-après le fonctionnement du dispositif conformément à l'invention.

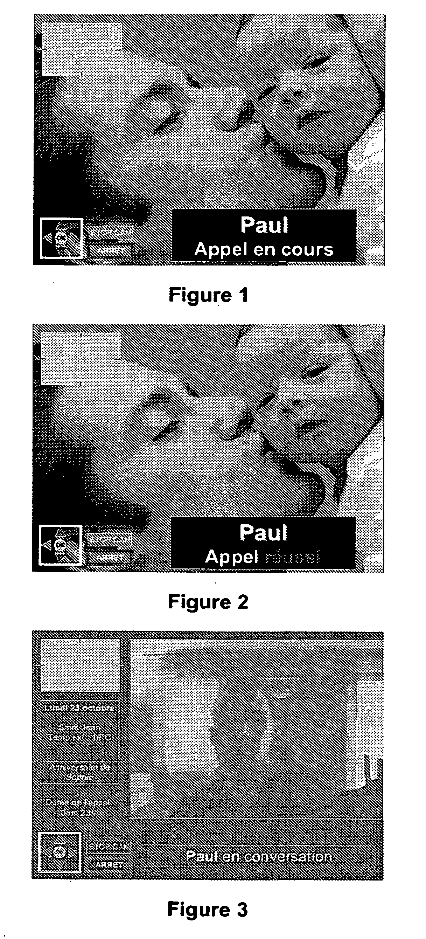

Tout d'abord et dans le cas d'un appel entrant, et en relation avec les figures 1 à 3, à l'arrivée de l'appel, transitant par le boîtier intégrant la centrale intelligente, un signal sonore et/ou lumineux se matérialise, le signal lumineux apparaissant notamment au niveau dudit boîtier, et étant susceptible d'être relayé au niveau du combiné. Celui-ci se met à vibrer s'il est muni d'un vibreur et s'il n'est pas implanté sur son support.

Corollairement, si le téléviseur est en mode veille, il s'allume automatiquement. Si en revanche, il est déjà en marche, l'émission de télévision est stoppée et le dispositif prend la main.

La photographie de l'appelant, stockée dans la mémoire de la centrale intelligente, s'affiche sur l'écran, ainsi que son identifiant (nom, prénom, ou surnom). Au surplus, le nom de l'identifiant est avantageusement prononcé, soit par le haut-parleur du combiné, soit par les haut-parleurs du téléviseur en fonction ou non de l'activation du signal sonore de ce dernier (figure 1).

Parallèlement et si le dispositif est muni d'une Webcam ou d'une caméra vidéo, un retour de l'image de l'appelé s'affiche également sur l'écran afin que celui-ci valide par le biais de la télécommande ou d'un bouton sur le socle, s'il souhaite ou non être vu et au demeurant, dans l'affirmative, centralise sa position par rapport à la Webcam, sauf en cas de capteur vidéo assurant un cadrage automatique.

Dans l'exemple décrit, l'image affichée sur le téléviseur laisse apparaître en bas à gauche la mire relative aux actions possibles de la télécommande, et notamment l'acceptation ou le refus de l'appel entrant.

Pendant cette étape préliminaire, l'appelant ne voit pas l'appelé. Si l'appelé valide par simple pression sur l'une des touches de la télécommande son choix de rentrer en contact (figure 2), la caméra de l'appelé se met en marche et transmet l'image en temps réel ainsi acquise à l'appelant simultanément, et l'image dynamique de l'appelant s'affiche sur l'écran si celui-ci dispose d'un appareil identique ou d'un ordinateur équipé d'une Webcam (figure 3).

A la fin de la conversation, le téléviseur repasse en mode veille au bout de quelques secondes ou reprend l'émission interrompue.

En revanche, si l'appelé ne souhaite pas entrer en communication, l'appelant est basculé sur un répondeur vidéo associé au boîtier qui enregistre un message. La présence d'un message est signalée par un clignotement d'une lampe ou diode électroluminescente externe au boîtier, et annonce en outre via les haut-parleurs du téléviseur ou de la télécommande de la présence d'un tel message. Le visage des appelants ayant laissé un message s'affiche sur l'écran du téléviseur. La sélection de ceux-ci du visage sur l'écran du téléviseur par le biais de la télécommande induit le déroulement du message correspondant.

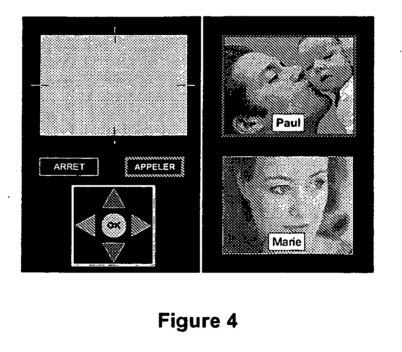

S'agissant des appels sortants, une pression sur la télécommande met en marche le téléviseur (préalablement en veille). Il s'affiche alors sur l'écran de celui-ci une liste de visages titrés d'une information écrite, précisant le nom, prénom et/ou surnom correspondant au visage (figure 4), et stockée dans la mémoire de la centrale intelligente.

La sélection de la personne à appeler s'effectue à l'aide des photographies apparaissant sur l'écran du téléviseur. Afin de sélectionner l'image que le détenteur du dispositif de l'invention souhaite appeler, et dans un mode particulier de réalisation de l'invention, il induit le-déplacement d'un cadre particulier autour de la photo de celui-ci à l'aide de l'une des touches de la télécommande.

Avantageusement, lors de chaque sélection, l'information écrite est en outre prononcée par les haut-parleurs du téléviseur et/ou du boîtier.

Selon un mode préféré de l'invention, l'ordre d'apparition des photographies sur l'écran évolue de manière statistique, de telle sorte que les personnes les plus fréquemment appelées soient visibles en premier dans la liste.

Un système d'analyse statistique de l'activité du dispositif est susceptible d'être associé à celui-ci. Ces statistiques sont calculées automatiquement sur la base des appels effectués et reçus. On est ainsi à même d'émettre un message d'alerte en cas de baisse significative d'utilisation. Ce changement d'utilisation est en effet susceptible d'être inhérent soit à un changement d'activité du détenteur, soit pour cause de départ en vacances, soit encore pour hospitalisation voire même pour cause de début d'isolement. Il devient ainsi possible d'anticiper cet isolement et toutes les maladies induites.

Toujours dans le cadre de la gestion d'un appel sortant, un retour d'image par le biais de la caméra vidéo permet au détenteur du dispositif interactif de valider son image. Lorsque le correspondant est sélectionné, une nouvelle pression sur l'une des touches de la télécommande permet d'appeler celui-ci.

Avantageusement, une information sonore émanant du boîtier ou de la télécommande indique l'action de mise en relation et le fait patienter. En cas d'acceptation de l'appel, l'image de l'appelé apparaît en temps réel. En revanche, en cas de non aboutissement de l'appel, le détenteur de l'appareil a la possibilité de laisser un message si l'appelé dispose d'un même appareil ou d'un répondeur classique.

On conçoit dès lors tout l'intérêt du dispositif conforme à l'invention dans le cadre de la surveillance des personnes isolées, et notamment des personnes âgées, et plus particulièrement dans le cadre de la prévention de l'isolement. Un tel dispositif présente l'avantage d'être particulièrement simple d'utilisation, et ce, tant pour la personne en perte ou en quête d'autonomie que pour les personnes susceptibles de l'appeler. Il est en outre non intrusif

Au surplus, en raison de la possibilité de gérer le répertoire des personnes présentes sur la liste dite « blanche », on peut moduler à volonté une telle liste, et ainsi limiter, ou au contraire augmenter les personnes habilitées à entrer en relation avec celle-ci.

Le « référent » peut être et/ou un membre de la famille, un personne de l'établissement d'accueil, la société gérant l'appareil. L'utilisateur garde donc la possibilité, s'il en a les facultés, de gérer lui-même, via un intermédiaire, les paramètres de son appareil.

## Revendications

1. Dispositif interactif pour la mise en relation de personnes à distance, **caractérisé en ce qu'**il comprend :
- un boiter de centrale intelligente qui est adapté pour :
- être connecté à un écran de télévision ou de PC,
- être connecté au réseau téléphonique et/ou internet,
- communiquer par radiofréquence avec un combiné télécommande,
- un combiné télécommande qui :
- est muni d'un microphone, d'au moins un haut parleur et de touches actionnables,
- comprend au moins un organe d'alerte visuel et, éventuellement, un vibreur
- est adapté pour communiquer par radiofréquence avec le boiter de centrale intelligente,
- est adapté pour que la centrale intelligente induise, au niveau du combiné, l'émission d'un signal sonore, le fonctionnement de l'organe d'alerte visuel et, éventuellement, du vibreur
et **en ce qu'**il est adapté pour :
- permettre, selon une sélection de touches du combiné télécommande, d'une part, une communication via le réseau téléphonique et/ou internet entre un détenteur du dispositif et un correspondant, et, d'autre part, la gestion des informations susceptibles de s'afficher à l'écran,
- permettre le suivi d'une conversation téléphonique par le détenteur du dispositif via le micro et le haut-parleur du combiné télécommande
- commander l'affichage sur l'écran d'informations relatives au correspondant,
- commander le fonctionnement de l'organe d'alerte visuel et de l'éventuel vibreur du combiné télécommande,
- permettre via internet une modification des données de paramétrage du dispositif.

2. Dispositif interactif selon la revendication 1, **caractérisé en ce qu'**il comprend une liste, dite blanche, enregistrée de correspondants habilités à entrer en relation avec le détenteur du dispositif et **en ce qu'**il est adapté pour permettre un paramétrage à distance via internet de cette liste blanche.

3. Dispositif interactif selon la revendication 1 ou 2, **caractérisé en ce qu'**il comprend une liste enregistrée de correspondants comprenant des photographies et des informations relatives à ces correspondants et qu'il est adapté pour permettre une sélection d'un correspondant à appeler au moyen des photographies, et pour permettre un paramétrage à distance via internet de la liste de correspondants.

4. Dispositif interactif selon la revendication 3, **caractérisé en ce que** les informations relative à chaque correspondant comprennent au moins une information parmi les informations suivantes :
- une photographie ou une vidéo du correspondant,
- la date de naissance,
- l'adresse e-mail,
- le numéro de téléphone cellulaire,
- le numéro de téléphone fixe,
- un mot de passe,
- la prononciation du nom, prénom ou surnom du correspondant, éventuellement assurée par le correspondant.

5. Dispositif interactif selon la revendication 3 ou 4, **caractérisé en ce qu'**il est adapté pour permettre à chaque correspondant d'effectuer à distance un paramétrage des informations le concernant.

6. Dispositif interactif selon l'une des revendications 1 à 5 **caractérisé en ce que**:
- le dispositif comprend une liste enregistrée, dite chaîne d'appels, comprenant les coordonnées d'au moins une personne dite réfèrent, et est adapté pour permettre un paramétrage à distance de la liste de la chaîne d'appels,
- le combiné télécommande comprend une touche d'urgence,
- le dispositif est adapté pour, en cas d'action sur la touche d'urgence, déclencher un appel à destination d'un réfèrent de la chaîne d'appels.

7. Dispositif interactif selon l'une des revendications 1 à 6, **caractérisé en ce qu'**il est adapté pour calculer des statistiques d'appel reçus et d'appel émis et pour émettre un message d'alerte en cas de baisse significative d'utilisation.

8. Dispositif interactif selon l'une des revendications 1 à 7, **caractérisé en ce qu'**il est adapté pour être connecté à internet et pour permettre son paramétrage via internet pour que son fonctionnement et celui du combiné télécommande rende l'interaction avec l'utilisateur simple et intuitive.

9. Dispositif interactif selon l'une des revendications 1 à 8, **caractérisé en ce qu'**il comprend un capteur vidéo et **en ce qu'**il est adapté pour fonctionner selon deux modes :
- premier mode de diffusion d'images vidéo, et notamment du le détenteur du dispositif, sous réserve de l'acceptation par ce dernier d'une communication vidéo;
- un second mode de traitement, par acquisition de manière non intrusive, de données vidéo susceptibles d'indiquer ou de refléter un état particulier du détenteur du dispositif située dans le champ dudit capteur, et susceptible d'induire, après traitement par le boîtier de centrale intelligente, l'émission d'un signal en direction du correspondant ou de toute autre entité destinée à assurer un contrôle, une surveillance, ou un suivi du détenteur du dispositif.

10. Dispositif interactif selon la revendication 9, **caractérisé en ce qu'**il est adapté pour être paramétré afin d'assurer deux modes de fonctionnement du combiné télécommande :
- un mode actif, selon lequel l'actionnement de l'une des touches dudit combiné induit l'interaction avec le réseau téléphonique notamment;
- un mode réactif, selon lequel, consécutivement soit à l'actionnement de l'une des touches dudit combiné, soit à la détection par le capteur vidéo d'un fait paramétrable, capté, le dispositif induit l'actionnement des organes d'alerte ou du vibreur du combiné, ou l'émission d'un signal sonore par le biais du haut parleur dont il est muni.

11. Dispositif interactif pour la mise en relation de personnes à distance selon l'une des revendications 1 à 10, **caractérisé en ce que** le combiné est muni d'une prise type « jack » analogique destinée à permettre la connexion :
- de capteurs personnalisés susceptibles d'être actionnés par une touche ou un bouton supplémentaire ménagé sur ledit combiné,
- d'un certain nombre d'appareils de télésanté, susceptibles de transmettre les mesures, qu'ils sont destinés à réaliser, à un "réfèrent", ce dernier pouvant être constitué par un établissement de santé, du personnel médico-social, du personnel soignant, voire des prestataires de service.

## Patentansprüche

1. Interaktives Gerät zur Herstellung der Kommunikation zwischen Personen an verschiedenen Standorten, das folgende Komponenten umfasst:
- Ein zentrales Steuerungsmodul, das:
- mit einem Fernseher- oder Computerbildschirm verbunden werden kann,
- an das Telefonnetz und/oder Internet angeschlossen werden kann,
- per Funkfrequenz mit einem ferngesteuerten Hörer kommunizieren kann,
- Ein ferngesteuerter Hörer, der:
- mit einem Mikrofon, mindestens einem Lautsprecher und Bedienungstasten ausgestattet ist,
- mindestens eine visuelle Alarmvorrichtung hat, und eventuell über Vibrationsalarm verfügt,
- über Funk mit dem zentralen Steuerungsmodul kommunizieren kann,
- durch das Steuerungsmodul den Befehl zur Aussendung des akustischen Signals oder zur Auslösung des visuellen Alarms oder eventuell des Vibrationsalarms empfangen kann
und der folgende Funktionalitäten besitzt:
- Aufbau einer Kommunikation über das Telefonnetz und/ oder Internet zwischen dem Halter des Gerätes und dem Kommunikationspartner nach Wahl über die Tasten des ferngesteuerten Hörers einerseits und Verarbeitung der zur Anzeige auf dem Display verfügbaren Daten andererseits,
- Möglichkeit der Verfolgung eines Telefongesprächs durch den Halter des Gerätes per Mikrofon und Lautsprecher des ferngesteuerten Hörers
- Anweisung zur Anzeige der Daten des Gesprächspartners auf dem Display,
- Anweisung zur Auslösung des visuellen Alarm und des eventuellen Vibrationsalarms des ferngesteuerten Hörers,
- Möglichkeit, die Geräteeinstellungen über das Internet vorzunehmen.

2. Interaktives Gerät gemäß der Anforderung 1 mit einer gespeicherten so genannten weißen Liste der potentiellen autorisierten Gesprächspartner des Halters des Gerätes und der Möglichkeit, die Einstellungen dieser weißen Liste aus der Ferne über das Internet vorzunehmen.

3. Interaktives Gerät gemäß der Anforderung 1 oder 2 mit einer gespeicherten Liste der Gesprächspartner, die Fotos und Daten dieser Gesprächspartner umfasst, die die Auswahl eines gewünschten Gesprächspartners über sein Foto sowie die Einstellung der Gesprächspartnerliste aus der Ferne über das Internet ermöglicht.

4. Interaktives Gerät gemäß der Anforderung 3, dessen gespeicherte Personendaten mindestens eine derfolgenden Angaben über jeden Gesprächspartner enthalten:
- Foto oder Video des Gesprächspartners,
- Geburtsdatum,
- E-Mail-Adresse,
- Mobilfunknummer,
- Festnetztelefonnummer,
- Passwort,
- Aussprache des Namens, Vornamens oder Beinamens des Gesprächspartners, eventuell durch den Gesprächspartner bestätigt.

5. Interaktives Gerät gemäß der Anforderung 3 oder 4, das es jedem Gesprächspartner ermöglicht, aus der Entfernung die ihn betreffenden Daten einzustellen.

6. Interaktives Gerät gemäß einer der Anforderungen 1 bis 5, das sich durch folgende Eigenschaften auszeichnet:
- Das Gerät verfügt über eine gespeicherte Liste, die so genannte Anrufkette, mit den Kontaktdaten von mindestens einem so genannten Adressaten (Bezugsperson) und ermöglicht die Einstellung der Anrufkettenliste aus der Entfernung,
- Der ferngesteuerte Hörer besitzt eine Notruftaste,
- Das Gerät kann bei Betätigung der Notruftaste einen Anruf an einen Adressaten (Bezugsperson) der Anrufkette auslösen.

7. Interaktives Gerät gemäß einer der Anforderungen 1 bis 6, das in der Lage ist, Statistiken der eingehenden und ausgehenden Anrufe zu erstellen, um bei starkem Rückgang der Nutzung eine Warnmeldung zu senden.

8. Interaktives Gerät gemäß einer der Anforderungen 1 bis 7, das mit dem Internet verbunden sein kann und über das Internet eingestellt werden kann, und dem Nutzer so eine einfache und intuitive Bedienung des Gerätes und seines ferngesteuerten Hörers ermöglicht.

9. Interaktives Gerät gemäß einer der Anforderungen 1 bis 8, das über einen Videosensor verfügt und in zwei Betriebsmodi funktionieren kann:
- Erster Modus: Verbreitung von Videobildern insbesondere des Gerätehalters unter Vorbehalt, dass Letzterer mit der Videoübertragung einverstanden ist;
- Zweiter Modus: unaufdringliche Aufzeichnung von Videobildern, die einen besonderen Zustand des sich im Bereich des Sensors befindenden Gerätehalters anzeigen oder widerspiegeln können und Aussendung eines Signals an den Gesprächspartner oder jede beliebige andere Instanz zur Gewährleistung der Kontrolle, Überwachung oder Verfolgung des Gerätehalters nach Verarbeitung durch das zentrale Steuerungsmodul.

10. Interaktives Gerät gemäß der Anforderung 9, das so eingestellt werden kann, dass die zwei Funktionsmodi des ferngesteuerten Hörers gewährleistet sind:
- Aktionsmodus: Die Betätigung einer der Tasten des Hörers löst die Interaktion mit dem Telefonnetz aus;
- Reaktionsmodus: Infolge der Betätigung einer der Tasten des Hörers oder der Feststellung eines definierten, einstellbaren Ereignisses durch den Videosensor löst das Gerät die Aktivierung der Alarmsignale, des Vibrationsalarmes des Hörers oder die Ausgabe eines Tonsignals über den vorhandenen Lautsprecher aus.

11. Interaktives Gerät zur Herstellung der Kommunikation zwischen Personen an verschiedenen Standorten gemäß einer der Anforderungen 1 bis 10, dessen Hörer mit einem Analoganschluss des Typs « Jack » ausgerüstet ist, der folgende Verbindungen ermöglicht:
- Anschluss an individuell abgestimmte Sensoren, die über eine Taste oder einen Zusatzschalter über den Hörer betätigt werden können,
- Anschluss an zahlreiche fernbetriebene medizinische Geräte zur Übertragung der von diesen durchgeführten Messungen an einen Adressaten (Bezugsperson), der eine Einrichtung des Gesundheitswesens sowie medizinisches Betreuungs- oder Pflegepersonal aus dem Dienstleistungsbereich sein kann.

## Claims

1. Interactive device for connecting persons remotely, **characterised by** the fact that it comprises:
- an intelligent central unit which can:
- be connected to a TV or PC screen,
- be connected to the telephone and/or internet network,
- communicate by radiofrequency with a remote control handset,
- a remote control handset which:
- has a microphone, at least one loudspeaker and touch keys,
- comprises at least one visual alert function, and possibly a vibrator,
- can communicate by radiofrequency with the intelligent central unit,
- can make the intelligent central unit cause, on the handset, the emission of an acoustic signal, the operation of the visual alert function, and if applicable the operation of the vibrator,
and by the fact that it can:
- permit, depending on which keys are selected on the remote control handset, on the one hand communication via the telephone and/or internet network between a holder of the device and a correspondent, and on the other hand management of information that may be displayed on the screen,
- permit the monitoring of a telephone conversation by the holder of the device via the microphone and loudspeaker of the remote control handset,
- control the display on the screen of information relating to the correspondent,
- control the operation of the visual alert function and vibrator, if applicable, of the remote control handset,
- permit via the internet a change in the configuration data of the device.

2. Interactive device according to claim 1, **characterised by** the fact that it comprises a saved list, so called whitelist, of correspondents authorised to communicate with the holder of the device and by the fact that it will permit remote configuration of this whitelist via the internet.

3. Interactive device according to claims 1 or 2, **characterised by** the fact that it comprises a saved list of correspondents comprising photographs and information relating to these correspondents, and it can permit the selection of a correspondent to call by means of the photographs, and can permit remote configuration via internet of the list of correspondents.

4. Interactive device according to claim 3, **characterised by** the fact that the information relating to each correspondent comprises at least one of the following pieces of information:
- a photograph or video of the correspondent,
- date of birth,
- e-mail address,
- mobile phone number,
- landline telephone number,
- password,
- pronouncement of the surname, first name or nickname of the correspondent, possibly by the correspondent.

5. Interactive device according to claim 3 or 4, **characterised by** the fact that it can permit each correspondent to configure, remotely, the information concerning him.

6. Interactive device according to any one of the claims 1 to 5 **characterised by** the fact that:
- the device comprises a saved list, a so-called call chain, comprising the details of at least one so-called reference person, and can permit remote configuration of the call chain list,
- the remote control handset comprises an emergency key,
- the device can, if the emergency key is operated, trigger a call to a reference person on the call chain.

7. Interactive device according to any one of claims 1 to 6, **characterised by** the fact that it can calculate the received calls and dialled numbers statistics, to issue an alert message in the case of a significant reduction in use.

8. Interactive device according to any one of claims 1 to 7, **characterised by** the fact that it can be connected to the internet to permit its configuration via the internet so that its operation and the operation of the remote control handset makes interaction with the user simple and intuitive.

9. Interactive device according to any one of claims 1 to 8, **characterised by** the fact that it comprises a video sensor and it can function in two modes:
- a first mode for broadcasting video pictures, namely of the holder of the device, subject to acceptance by the latter of a video communication;
- a second processing mode, by non-intrusive acquisition of video data that can indicate or reflect a particular status of the holder of the device situated in the field of the said sensor, and which can cause, after processing by the intelligent central unit, the emission of a signal in the direction of the correspondent or any other entity intended to provide checking, supervision or monitoring of the holder of the device.

10. Interactive device according to claim 9, **characterised by** the fact that it can be set to provide two operating modes of the remote control handset:
- an active mode, according to which the operation of one of the keys of the said handset causes interaction especially with the telephone network;
- a reactive mode according to which, following either the operation of one of the keys of the said handset, or the detection and capture by the video sensor of a configurable event, the device causes the activation of the alert functions or the vibrator of the handset, or the issue of an acoustic signal via its loudspeaker.

11. Interactive device for connecting persons remotely according to any one of the claims 1 to 10, **characterised by** the fact that the handset has an analogue jack socket to permit connection of the following:
- customised sensors that can be activated by a key or additional button located on the said handset,
- a certain number of remote health monitoring devices that can transmit measurements, which they are intended to make, to a "reference person", and the latter may be a health establishment, medical-social staff, care staff or even service providers.
